# EUROPÄISCHE PATENTSCHRIFT

(11) **EP 2 160 304 B1**
(45) Veröffentlichungstag und Bekanntmachung des Hinweises auf die Patenterteilung: **14.08.2013**
(21) Anmeldenummer: 08761140.6
(22) Anmeldetag: 18.06.2008
(51) Int. Cl.: B60Q 1/14

(54) **VERFAHREN ZUM STEUERN EINER SCHEINWERFERANORDNUNG FÜR EIN FAHRZEUG MIT SEPARATEN SCHEINWERFERN FÜR EIN ABBLENDLICHT UND EIN FERNLICHT**
METHOD FOR CONTROLLING A HEADLAMP ARRANGEMENT FOR A VEHICLE WITH SEPARATE HEADLAMPS FOR A LOW-BEAM AND A HIGH-BEAM LIGHT
PROCÉDÉ POUR COMMANDER UN ENSEMBLE DE PHARES POUR UN VÉHICULE ÉQUIPÉ DE PHARES SÉPARÉS POUR UN FEU DE CROISEMENT ET UN FEU DE ROUTE

(30) Priorität: 21.06.2007 DE 102007028658
(43) Veröffentlichungstag der Anmeldung: 10.03.2010
(73) Patentinhaber: Volkswagen Aktiengesellschaft, 38440 Wolfsburg (DE); Hella KGaA Hueck & Co., 59552 Lippstadt (DE)
(72) Erfinder: SCHNEIDER, Arthur, 38162 Cremlingen (DE); HILGENSTOCK, Jörg, 38527 Meine (DE)
(74) Vertreter: Reitstötter - Kinzebach
(86) Internationale Anmeldenummer: PCT/EP2008/057669
(87) Internationale Veröffentlichungsnummer: WO 2008/155342

(56) Entgegenhaltungen:
- DE-A1- 2 144 197
- DE-A1-102004 042 092
- DE-B- 1 158 915
- JP-A- 2008 037 240
- US-A1- 2003 137 849
- US-A1- 2004 052 083
- US-A1- 2007 091 629
- US-A1- 2007 147 055

## Beschreibung

Die vorliegende Erfindung betrifft ein Verfahren zum Steuern einer Scheinwerferanordnung für ein Fahrzeug mit einer rechten und einer linken Scheinwerfereinheit, die jeweils separate Scheinwerfer für ein Abblendlicht und ein Fernlicht umfassen, wobei die von den Scheinwerfern für das Fernlicht erzeugte Lichtverteilung hinsichtlich Leuchtweite und seitliche Ausleuchtung veränderbar ist.

Aus der DE 43 18 681 C2 ist eine einstellbare Blendeneinrichtung für einen Scheinwerfer nach dem Projektionsprinzip für ein Kraftfahrzeug bekannt. Die in dieser Druckschrift beschriebene Blendeneinrichtung absorbiert einen Teil der Lichtstrahlen, die von einem Reflektor des Scheinwerfers reflektiert werden und sich in Richtung einer Projektionslinse ausbreiten, so dass sich eine Hell-Dunkel-Verteilung in der Gesamtlichtverteilung einstellt. Die Lage dieser Hell-Dunkel-Grenze ist einstellbar. Hierfür weist die Blendeneinrichtung zwei rohrförmige Blendenteile auf, die exzentrisch gelagert sind, so dass sich bei einer Drehung der Blendenteile die Hell-Dunkel-Grenzlinien vertikal bewegen. Die beiden Blendenteile besitzen einen unterschiedlichen Durchmesser und sind separat drehbar, so dass sich die Form der Hell-Dunkel-Grenze einstellen lässt.

Ferner ist aus der DE 197 56 574 A1 eine Beleuchtungseinheit für ein Fahrzeug bekannt, die eine Fahrumgebungs-Detektionsvorrichtung und eine Beleuchtungssteuerungsvorrichtung umfasst, mit welcher die Gesamtlichtverteilung der Scheinwerfer des Fahrzeugs gesteuert werden kann.

Die beiden vorgenannten Druckschriften betreffen Scheinwerferanordnungen, bei denen die Lichtfunktionen für das Fernlicht und das Abblendlicht rechts und links von einem einzigen Scheinwerfer bereitgestellt werden, sofern diese beiden Lichtfunktionen überhaupt bereitgestellt werden können. Es hat sich jedoch herausgestellt, dass, insbesondere bei der Verwendung von Halogenbirnen als Lichtquellen, die bereitgestellte Leuchtdichte bei bestimmten Verfahren zum Steuern der Scheinwerferanordnung nicht ausreicht, wenn nur ein Scheinwerfer pro Seite das Licht für das Abblend- und Fernlicht bereitstellt. Die vorliegende Erfindung betrifft daher ein Verfahren zum Steuern einer so genannten Doppelscheinwerferanordnung, bei der die Fernlichtfunktion getrennt von der Abblendlichtfunktion realisiert ist, d. h. für diese beiden Lichtfunktionen sind rechts und links jeweils separate Scheinwerfer bzw. Reflektoren vorgesehen sind.

Die DE 10 2004 042 092 A1 beschreibt ein Verfahren zur Ansteuerung einer Scheinwerferanordnung für Kraftfahrzeuge, bei welchem andere Verkehrsteilnehmer erfasst werden und die Lichtverteilung, die von der Scheinwerferanordnung erzeugt wird, in Abhängigkeit von anderen Verkehrsteilnehmern verändert wird. Dabei kann bei unveränderter Basislichtverteilung die seitliche Ausleuchtung der Zusatzlichtverteilung durch eine lokale Ausblendung über einen seitlichen Winkelbereich verändert werden.

Die DE 21 44 197 A1 beschreibt eine Beleuchtungseinrichtung für Straßenfahrzeuge mit jeweils zwei Scheinwerfern auf einer Fahrzeugseite. Bei Erfassung eines entgegenkommenden Verkehrsteilnehmers kann jeder Scheinwerfer unabhängig voneinander ganz oder teilweise durch Blenden abgedunkelt werden.

Die US 2007/091629 A1 beschreibt eine Fahrzeugleuchte für je eine Seite eines Fahrzeugs, die über eine Leuchte für ein Abblendlicht und eine Leuchte für ein Zusatzlicht verfügt. Die Fahrzeugleuchten können dabei mittels Blenden ganz oder teilweise abgedunkelt werden, insbesondere auch, um die Blendung entgegenkommender Verkehrsteilnehmer zu vermeiden.

In der nachveröffentlichten US 2007/147055 A1 wird eine Fahrzeugleuchte beschrieben, bei der zu einem Abblendlicht ein Fernlicht zuschaltbar ist, welches durch das Zu- und Abschalten verschiedener LED oder Mikrospiegel seitlich veränderbar ist.

Es ist die Aufgabe der vorliegenden Erfindung, ein Verfahren zum Steuern einer Scheinwerferanordnung für ein Fahrzeug bereitzustellen, mit dem dem Fahrer des Fahrzeugs eine möglichst gute Sicht auf die vor ihm liegende Fahrbahn und ggf. auf die Umgebung bereitgestellt wird und gleichzeitig eine Blendung anderer Verkehrsteilnehmer wirkungsvoll verhindert wird.

Diese Aufgabe wird erfindungsgemäß durch ein Verfahren mit den Merkmalen des Anspruchs 1 gelöst. Vorteilhafte Aus- und Weiterbildungen ergeben sich aus den Unteransprüchen.

Bei dem erfindungsgemäßen Verfahren wird ein Verkehrsteilnehmer in Richtung der Lichtemission der Scheinwerferanordnung erfasst und, wenn ein solcher Verkehrsteilnehmer erfasst wurde, wird die von den Scheinwerfern für das Fernlicht erzeugte Lichtverteilung hinsichtlich der seitlichen Ausleuchtung verändert, die von den separaten Scheinwerfern für das Abblendlicht erzeugte Lichtverteilung bleibt hingegen unverändert. Mittels des erfindungsgemäßen Verfahrens leuchten die Scheinwerfer für das Fernlicht an anderen Verkehrsteilnehmern zumindest seitlich vorbei. Hierdurch wird eine Blendung dieser Verkehrsteilnehmer verhindert. Gleichzeitig wird jedoch seitlich von den Verkehrsteilnehmern durch die für das Fernlicht vorgesehenen Scheinwerfer eine gute Ausleuchtung für den Fahrer des Fahrzeugs mit der Scheinwerferanordnung bereitgestellt. Gleichzeitig bleibt die Vorfeldausleuchtung durch die Scheinwerfer für das Abblendlicht unverändert erhalten.

Die von den Scheinwerfern für das Abblendlicht erzeugte Lichtverteilung hat bei der Scheinwerferanordnung, welche von dem erfindungsgemäßen Verfahren gesteuert wird, eine begrenzte Leuchtweite. Gemäß einem Ausführungsbeispiel des erfindungsgemäßen Verfahrens bildet die von den Scheinwerfern für das Fernlicht erzeugte Lichtverteilung durch die Veränderung der seitlichen Ausleuchtung in Richtung des erfassten Verkehrsteilnehmers einen Mittelbereich mit geringerer Leuchtweite und beidseitig neben diesem Mittelbereich Seitenbereiche mit größerer Leuchtweite.

Bei dem erfindungsgemäßen Verfahren wird somit in der Fernlichtverteilung in Richtung eines Verkehrsteilnehmers ein Korridor mit geringerer Leuchtweite gebildet, wobei sich der andere Verkehrsteilnehmer in diesem Korridor befindet. Es wird somit verhindert, dass dieser Verkehrsteilnehmer von der Lichtemission der Scheinwerferanordnung geblendet wird. Gleichzeitig wird bei dem erfindungsgemäßen Verfahren jedoch beidseitig zu dem erfassten Verkehrsteilnehmer jeweils ein Bereich mit größerer Leuchtweite bereitgestellt, so dass in diesen Bereichen dem Fahrer des Fahrzeugs weiterhin eine Ausleuchtung mit großer Reichweite zur Verfügung gestellt wird.

Die von den Scheinwerfern für das Fernlicht erzeugte Lichtverteilung wird seitlich von dem erfassten Verkehrsteilnehmer weggeschwenkt. Die Lichtverteilung des Fernlichts wird, insbesondere in Richtung der Fahrbahn des Fahrzeugs mit der Scheinwerferanordnung, von dem erfassten Verkehrsteilnehmer weggeschwenkt, wenn der Verkehrsteilnehmer auf der Gegenfahrbahn erfasst wird. Wenn mehrere Verkehrsteilnehmer auf der Gegenfahrbahn erfasst werden, kann vorzugsweise ferner die Leuchtweite der von den Scheinwerfern für das Fernlicht erzeugten Lichtverteilung abgesenkt werden.

Gemäß einer bevorzugten Ausgestaltung des erfindungsgemäßen Verfahrens wird die Leuchtweite der von den Scheinwerfern für das Fernlicht erzeugten Lichtverteilung soweit abgesenkt, dass sie kleiner als oder gleich der Leuchtweite der von den Scheinwerfern für das Abblendlicht erzeugten Lichtverteilung ist. In diesem Fall wird ferner zur Verringerung der Leuchtdichte der Gesamtlichtverteilung in den Lichtweg der Scheinwerfer für das Fernlicht eine Blende oder eine horizontal streuende Struktur gebracht. Diese Maßnahme stellt sicher, dass keine unzulässig hohen Leuchtdichten im Vorfeld des Fahrzeugs auftreten, welches in diesem Fall sowohl von den Scheinwerfern für das Abblendlicht als auch von den Scheinwerfern für das Fernlicht ausgeleuchtet wird.

Die Fernlichtverteilung der Scheinwerferanordnung in Richtung des erfassten Verkehrsteilnehmers kann z. B. dadurch verändert werden, dass die Emissionsrichtung des Lichtstrahls zumindest eines Scheinwerfers für das Fernlicht um eine vertikale und/oder horizontale Achse geschwenkt wird. Die Emissionsrichtungen der Lichtstrahlen der Fernlichtscheinwerfer werden insbesondere um eine vertikale Achse auseinandergeschwenkt, wenn ein Verkehrsteilnehmer in Richtung der Lichtemission der Scheinwerferanordnung erfasst wird. Falls die Scheinwerferanordnung eine Kurvenlichtfunktion umfasst, bei welcher die Emissionsrichtung um eine vertikale Achse schwenkbar ist, kann diese für das Kurvenlicht bereits zur Verfügung stehende Funktion ferner bei dem erfindungsgemäßen Verfahren verwendet werden, um ein Blenden anderer Verkehrsteilnehmer zu vermeiden. Das erfindungsgemäße Verfahren lässt sich somit bei einer Scheinwerferanordnung mit Kurvenlichtfunktion sehr kostengünstig realisieren.

Gemäß einer bevorzugten Weiterbildung des erfindungsgemäßen Verfahrens wird ferner der vertikale Winkel des Verkehrsteilnehmers in Richtung der Lichtemission der Scheinwerferanordnung erfasst. Unter dem vertikalen Winkel wird der zwischen einer Horizontalebene des lichtemittierenden Fahrzeugs und der Verbindungslinie des lichtemittierenden Fahrzeugs und dem anderen Verkehrsteilnehmer gebildete Winkel in Vertikalrichtung verstanden. In diesem Fall kann die Leuchtweite des Fernlichts im Mittelbereich in Richtung des erfassten Verkehrsteilnehmers in Abhängigkeit von dem vertikalen Winkel des Verkehrsteilnehmers geregelt werden. Ist der andere Verkehrsteilnehmer ein vorausfahrendes Fahrzeug, kann somit bei dem erfindungsgemäßen Verfahren immer die maximale Leuchtweite bis zu diesem vorausfahrenden Fahrzeug bereitgestellt werden, ohne den Fahrer des vorausfahrenden Fahrzeugs zu blenden. Verringert sich der Abstand zu diesem vorausfahrenden Fahrzeug und damit der vertikale Winkel, wird auch die Leuchtweite im Mittelbereich verringert. Vergrößert sich der Abstand zum vorausfahrenden Fahrzeug, kann auch die Leuchtweite im Mittelbereich vergrößert werden.

Die von dem erfindungsgemäßen Verfahren erzeugte Fernlichtverteilung kann symmetrisch hinsichtlich der Mittelachse der Gesamtlichtverteilung sein. Gemäß einer anderen Ausgestaltung des Verfahrens wird eine asymmetrische Lichtverteilung mit geringerer Leuchtweite im Mittelbereich erzeugt.

Gemäß einer weiteren Ausgestaltung des erfindungsgemäßen Verfahrens wird eine Messgröße für den gefahrenen Kurvenradius gewonnen. In diesem Fall kann die Leuchtweite der Fernlichtscheinwerfer insgesamt mit kleiner werdendem Kurvenradius abgesenkt werden. Die Messgröße für den Kurvenradius kann beispielsweise der Lenkwinkeleinschlag sein. Diese Größe lässt sich relativ einfach gewinnen. Der Kurvenradius kann jedoch auch genauer durch Parameter bestimmt werden, die üblicherweise in Verbindung mit Fahrzeugstabilitätssystemen gewonnen werden.

Des Weiteren kann die Leuchtweite der Fernlichtscheinwerfer auch in Abhängigkeit von Navigationsdaten gesteuert werden. Beispielsweise kann in geschlossenen Ortschaften eine geringere maximale Leuchtweite als außerhalb geschlossener Ortschaften angesteuert werden.

Ferner kann erfasst werden, ob eine Kuppe überfahren wird und, falls eine Kuppe überfahren wird, wird die Leuchtweite der Fernlichtscheinwerfer insgesamt auf einen Grenzwert abgesenkt. Gleichermaßen kann erfasst werden, ob eine Senke durchfahren wird und, falls eine Senke durchfahren wird, wird die Leuchtweite der Fernlichtscheinwerfer insgesamt auf einen Schwellwert angehoben.

Bei dem erfindungsgemäßen Verfahren wird die Leuchtweite und auch die seitliche Ausleuchtung der Scheinwerfer für das Fernlicht durch elektronische Steuersignale verändert, die einen Schrittmotor ansteuern, der mit den Fernlichtscheinwerfern gekoppelt ist. Ergänzend lässt sich auch prinzipiell die Leuchtweite der Scheinwerfer für das Abblendlicht verstellen. In diesem Fall reicht jedoch eine manuelle Verstellung zur Grundeinstellung des Abblendlichts aus.

Bei dem Verkehrsteilnehmer kann es sich insbesondere um ein vorausfahrendes oder ein entgegenkommendes Fahrzeug handeln.

Die Erfindung wird nun anhand von Ausführungsbeispielen mit Bezug zu den Zeichnungen erläutert.
- Fig. 1: zeigt schematisch ein Ausführungsbeispiel der Scheinwerferanordnung zur Durchführung des erfindungsgemäßen Verfahrens,
- Fig. 2A und 2B: zeigen Isolux-Diagramme der Gesamthelligkeitsverteilung auf einer senkrechten Wand ohne ein vorausfahrendes Fahrzeug und beim Erfassen eines vorausfahrenden Fahrzeugs,
- Fig. 3: zeigt eine herkömmliche Lichtverteilung der Scheinwerfer für das Abblendlicht,
- Fig. 4: zeigt eine herkömmliche Lichtverteilung, welche sowohl durch die Scheinwerfer für das Abblendlicht, als auch durch die Scheinwerfer für das Fernlicht erzeugt wird,
- Fig. 5: zeigt ein Beispiel einer Lichtverteilung, bei welcher die Fernlichtverteilung einen schmalen, besonders hellen Bereich in der Mitte aufweist,
- Fig. 6: zeigt ein Beispiel einer Lichtverteilung, bei welcher der linke Fernlichtscheinwerfer ausgeschaltet ist und der rechte Fernlichtscheinwerfer nach außen geschwenkt wurde,
- Fig. 7: zeigt ein Beispiel für eine Lichtverteilung, die an eine Kolonne mit entgegenkommenden Fahrzeugen angepasst ist,
- Fig. 8: zeigt ein Beispiel für eine Lichtverteilung, bei welcher der linke Fernlichtscheinwerfer ausgeschaltet ist und der rechte Fernlichtscheinwerfer nach unten und nach außen weggeschenkt wurde und
- Fig. 9: zeigt ein Beispiel für eine Lichtverteilung, bei welcher die beiden Fernlichtscheinwerfer nach rechts geschwenkt wurden.

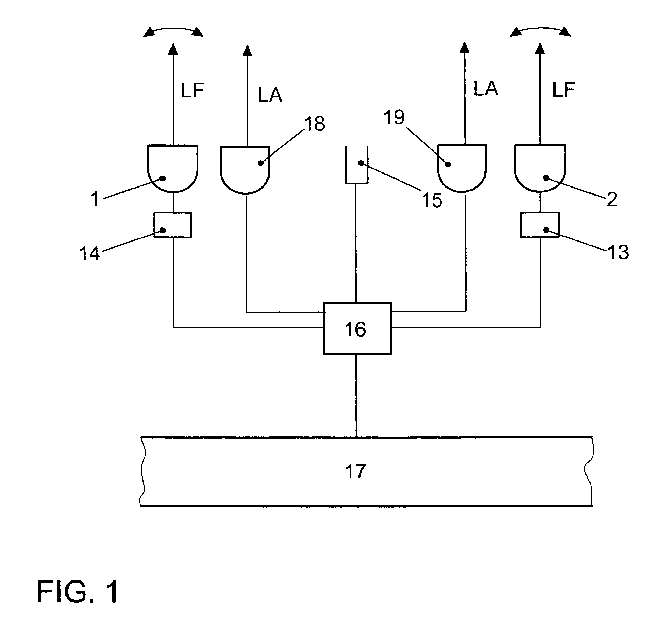

Mit Bezug zu Fig. 1 wird der allgemeine Aufbau der Scheinwerferanordnung zur Durchführung des Ausführungsbeispiels des erfindungsgemäßen Verfahrens erläutert:

Die Scheinwerferanordnung umfasst eine rechte und eine linke Scheinwerfereinheit. Für die Bereitstellung der Abblendlichtfunktion umfasst die rechte Scheinwerfereinheit den Scheinwerfer 19 und die linke Scheinwerfereinheit den Scheinwerfer 18. Die Scheinwerfer 18 und 19 emittieren auf an sich bekannte Weise in Richtung LA eine Lichtverteilung für das Abblendlicht.

Für die Bereitstellung der Fernlichtfunktion umfasst die Scheinwerferanordnung bei der rechten Scheinwerfereinheit ferner den Scheinwerfer 1 und bei der linken Scheinwerfereinheit den Scheinwerfer 2. Die Scheinwerfer 1 und 2 für das Fernlicht sind separat von den Scheinwerfern 18 und 19 für das Abblendlicht angeordnet. Die Scheinwerferanordnung ist somit ein Doppelscheinwerfersystem.

Die Fernlichtscheinwerfer 1, 2 umfassen auf an sich bekannte Art und Weise jeweils eine Lichtquelle, die von einem Freiformreflektor umgeben ist. Bei der Lichtquelle der Fernlichtscheinwerfer 1, 2 kann es sich um eine Halogenbirne, um lichtemittierende Dioden oder Gasentladungsleuchten, wie eine Xenonleuchte, handeln. Das von der Lichtquelle emittierte Licht wird von dem Reflektor in Lichtemissionsrichtung LF der Fernlichtscheinwerfer 1, 2 reflektiert. Die Lichtquelle, der Reflektor und ggf. eine Projektionslinse sind innerhalb eines Gehäuses angeordnet, das von einer Lichtscheibe abgeschlossen ist.

Die Lichtverteilung des von den Scheinwerfern 1 und 2 bereitgestellten Fernlichts lässt sich mittels Stellmotoren sowohl um eine vertikale als auch um eine horizontale Achse schwenken. Hierfür sind die Scheinwerfer 1 und 2 jeweils mit den Steuergeräten 13 und 14 verbunden. Diese Steuergeräte 13, 14 steuern somit den Schwenkwinkel der von den Scheinwerfern 1 und 2 emittierten Lichtstrahlen LF und damit die Fernlichtverteilung.

Werden die Emissionsrichtungen LF der Lichtstrahlen der Fernlichtscheinwerfer 1 und 2 auseinandergeschwenkt, d.h. jeweils um einen definierten Winkel nach außen geschwenkt, ergibt sich eine Fernlichtverteilung mit einem Mittelbereich mit geringerer Leuchtweite und beidseitig neben diesem Mittelbereich Seitenbereiche mit größerer Leuchtweite. Es wird somit ein Korridor mit geringerer Leuchtweite in der Mitte der Fernlichtverteilung gebildet. Bei diesem Korridor und bevorzugt auch bei der Oberkante der Fernlichtverteilung wird z. B. durch die Ausbildung der Freiformreflektoren eine sehr scharfe Kante bei der Hell-Dunkel-Grenze erzeugt.

Des Weiteren ist eine Einrichtung 15 zum Erfassen eines Verkehrsteilnehmers in Richtung der Lichtemission LF der Fernlichtscheinwerfer 1, 2 vorgesehen. Bei dieser Erfassungseinrichtung 15 kann es sich um eine Kamera mit angeschlossener Bildverarbeitungseinheit handeln, die die Lichter vorausfahrender und entgegenkommender Fahrzeuge 11, 10 erfasst. Mittels der Bildverarbeitungseinrichtung kann die Richtung dieser Lichter sowohl in einer horizontalen als auch in einer vertikalen Richtung erfasst werden. Die Bildverarbeitungseinheit analysiert die von der nach vorne gerichteten Kamera aufgenommene Szene. In dieser Szene wird die Lage der Lichter von vorausfahrenden und entgegenkommenden Fahrzeugen detektiert. Anhand des horizontalen Abstands zweier Scheinwerfer bzw. Rücklichter eines anderen Fahrzeugs kann die Bildverarbeitung zusätzlich auf die Breite des Fahrzeugs schließen. Schließlich können Lichtquellen erkannt werden, welche auf eine Straßenbeleuchtung bzw. eine Ortschaft schließen lassen. Eine Straßenbeleuchtung lässt sich in der Regel von Fahrzeuglichtern über die Position im Kamerabild oder über die mit dem Netz frequenzmodulierte Intensität unterscheiden. Der Öffnungswinkel der Kamera entspricht vorzugsweise dem Öffnungswinkel der Scheinwerferanordnung.

Die Richtung eines anderen Fahrzeugs wird in der horizontalen und vertikalen Ebene wird von der Erfassungseinrichtung 15 an ein Steuergerät 16 übertragen, welches des Weiteren mit den Steuergeräten 13 und 14 verbunden ist.

Gemäß einer anderen Ausgestaltung des Systems ist die Erfassungseinrichtung 15 als Laser- oder Radarsensor ausgebildet, mit welchem die Entfernung von Objekten in Richtung der Lichtemissionsrichtung L gemessen werden kann. Hierbei können insbesondere auch unbeleuchtete oder unzureichend beleuchtete Verkehrsteilnehmer, wie beispielsweise Fußgänger und ggf. auch Radfahrer erfasst werden. Außerdem können über die Entfernungsmessung gezielt Verkehrsteilnehmer erfasst werden, die sich innerhalb des Blendungsbereichs des Fernlichts befinden. Schließlich kann über die Messung von Entfernung, Geschwindigkeit und Bewegungsrichtung der Verkehrsteilnehmer eine gute Klassifikation von Fahrzeugen bzw. Verkehrsteilnehmern erfolgen, wodurch Fehlsteuerungen der Scheinwerferanordnung vermieden werden. Aus dem Abstand des Objekts lässt sich der vertikale Winkel berechnen, der als Steuergröße für die Scheinwerferanordnung verwendet wird.

Mit der Entfernungsmessung durch den Laser- oder Radarsensor ist es außerdem möglich, ein fahrendes Fahrzeug mittels der Geschwindigkeitserfassung von stehenden Objekten zu unterscheiden. Darüber hinaus kann mit einem scannenden Laserentfernungsmesser die Breite der erfassten Objekte vermessen werden, so dass mit höherer Sicherheit die Art von Objekten, d.h. ob es sich um einen Verkehrsteilnehmer, ein Kraftfahrzeug oder Radfahrer oder um einen Leitposten handelt, rückgeschlossen werden.

Der Laser- oder Radarsensor kann auch mit einer Kamera kombiniert werden, um die Erkennungssicherheit insbesondere hinsichtlich der Erfassung der Vertikalposition des Verkehrsteilnehmers zu erhöhen. Da Kameras, Laser- oder Radarsensoren in zunehmendem Maße Verwendung in Fahrzeugen mit Fahrassistenzsystemen finden, kann diese Sensorik für die Steuerung der Scheinwerferanordnung mitverwendet werden, ohne dass zusätzliche Kosten entstehen.

Das Steuergerät 16 ist ferner mit einem Fahrzeugbus 17 verbunden, über welchen weitere im Fahrzeug erfasste Daten an das Steuergerät 16 übertragen werden können. Beispielsweise kann auf diese Weise der Lenkwinkeleinschlag oder Daten, aus denen sich der gerade gefahrene Kurvenradius bestimmen lässt, an das Steuergerät 16 übertragen werden.

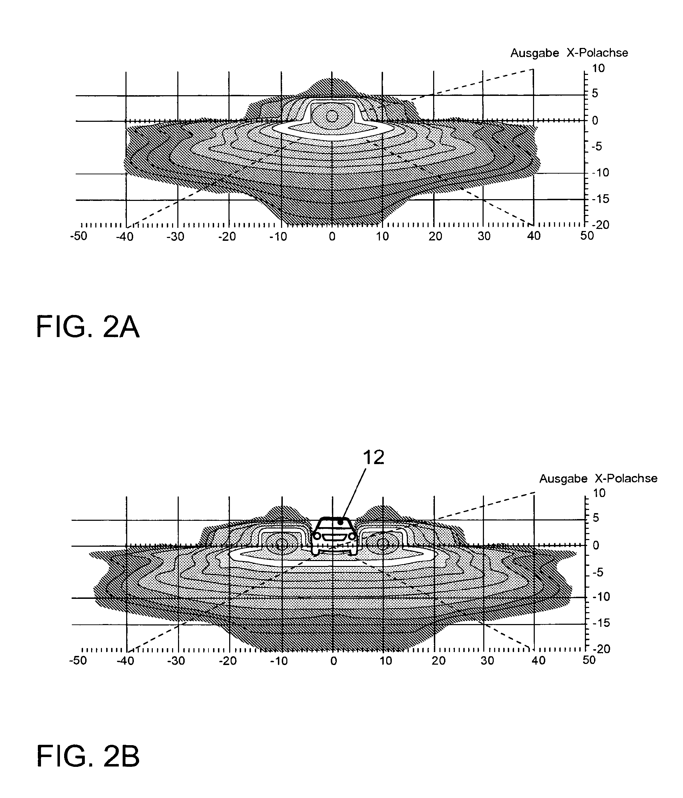

In der Fig. 2A ist ein Isolux-Diagramm mit einer Helligkeitsverteilung auf einer senkrechten Wand bei einer normalen Fernlicht- und Abblendlichtverteilung gezeigt. In Fig. 2B ist ein Isolux-Diagramm mit einer Helligkeitsverteilung auf einer senkrechten Wand gezeigt, bei der die Fernlichtscheinwerfer 1 und 2 auseinandergeschwenkt sind, wie sie gemäß der Erfindung angesteuert wird, wenn z.B. ein vorausfahrendes Fahrzeug 12 detektiert wird. Die Lichtemissionsrichtungen LF der beiden Fernlichtscheinwerfer 1 und 2 sind soweit auseinandergeschwenkt, dass die Breite des Mittelbereichs der Breite des Fahrzeugs 12 entspricht. Es wird somit in der Mitte der Gesamtlichtverteilung ein Bereich mit einer scharfen Hell-Dunkel-Grenze für einen anderen Verkehrsteilnehmer ausgespart, so dass dieser nicht geblendet wird.

Im Folgenden wird erläutert, wie die Fernlichtscheinwerfer 1 und 2 in Abhängigkeit von den Daten der Erfassungseinheit 15 und/oder weiteren im Fahrzeug erfassten Daten gemäß einem ersten Ausführungsbeispiel angesteuert werden:
Werden in der Mitte vor dem eigenen Fahrzeug 1 andere Verkehrsteilnehmer, wie z.B. ein vorausfahrendes Fahrzeug 1, detektiert, werden die Lichtemissionsrichtungen LF der beiden Fernlichtscheinwerfer 1 und 2 so geschwenkt, dass die anderen Verkehrsteilnehmer nicht geblendet werden. Insbesondere können die Lichtemissionsrichtungen LF auseinandergeschwenkt werden, so dass in der Gesamtlichtverteilung ein Mittelbereich mit geringerer Leuchtweite entsteht, in welchem sich der andere Verkehrsteilnehmer befindet, ohne geblendet zu werden. Außerdem kann der Schwenkwinkel für den rechten Fernlichtscheinwerfer 1 anders angesteuert werden, als der Schwenkwinkel für den linken Fernlichtscheinwerfer 2. Befinden sich z.B. rechts vor dem Fahrzeug 1 andere Verkehrsteilnehmer, die nicht geblendet werden sollen, kann im rechten Fernlichtscheinwerfer 1 die Hell-Dunkel-Grenze auf die Entfernung dieser Verkehrsteilnehmer angepasst werden. Die Lage der vertikalen Kante in der Gesamtlichtverteilung, d.h. die Lage bei der die Fernlichtausleuchtung des linken Scheinwerfers 1 beginnt, kann wiederum über den Schwenkwinkel hinsichtlich einer vertikalen Achse des linken Fernlichtscheinwerfers 2 angepasst werden, und insbesondere so nah wie möglich an den anderen Verkehrsteilnehmer herangeführt werden. Bei Verkehrsteilnehmern auf der linken Seite vom Fahrzeug 1 wird entsprechend andersherum verfahren, d.h. es wird der Schwenkwinkel des jeweils anderen Fernlichtscheinwerfers entsprechend angesteuert.

Die separaten Scheinwerfer 18 und 19, welche für das Abblendlicht vorgesehen sind, bleiben unverändert. Es wird somit zusätzlich zu der von den Fernlichtscheinwerfern 1 und 2 erzeugten Lichtverteilung von den Abblendlichtscheinwerfern 18 und 19 im Vorfeld des eigenen Fahrzeugs eine Ausleuchtung geschaffen.

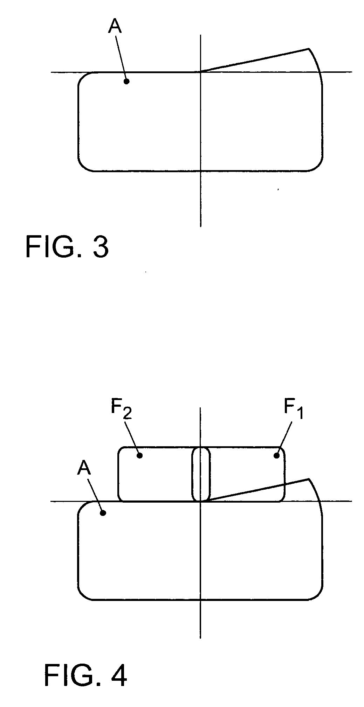

Mit Bezug zu den Fig. 3 bis 9 werden weitere Ausführungsbeispiele für das Verfahren zum Steuern der Scheinwerferanordnung beschrieben. Bei allen Ausführungsbeispielen bleibt die von den Scheinwerfern 18 und 19 erzeugte Lichtverteilung A für das Abblendlicht unverändert.

Die Fig. 3 zeigt zunächst allgemein die Lichtverteilung A, welche von den separaten Scheinwerfern 18 und 19 für das Abblendlicht erzeugt wird, wenn die Fernlichtscheinwerfer 1 und 2 ausgeschaltet sind. Fig. 4 zeigt eine herkömmliche Lichtverteilung für ein Fernlicht, bei welcher die Fernlichtscheinwerfer 1 und 2 eingeschaltet sind und die Lichtverteilungen F₁ bzw. F₂ erzeugen.

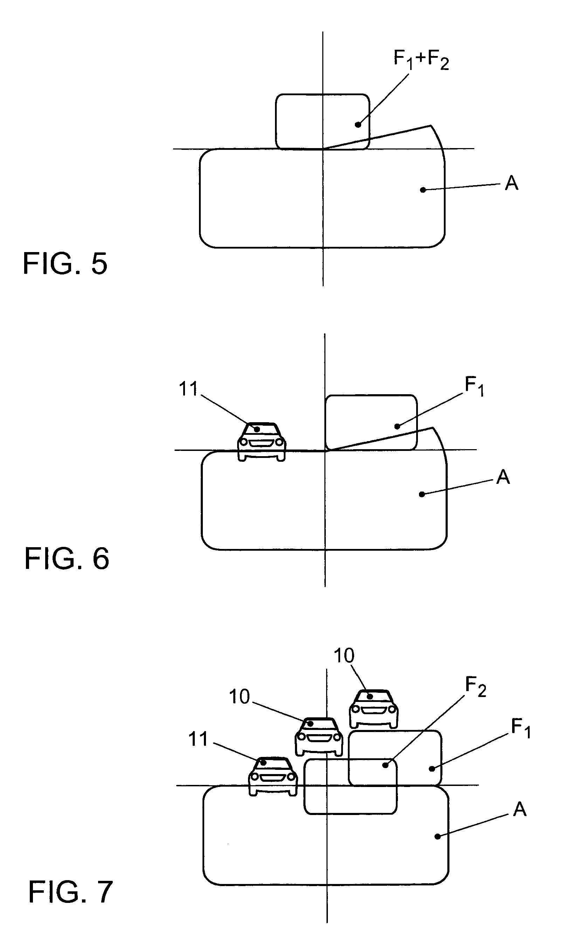

In Fig. 5 ist eine Lichtverteilung gezeigt, bei welcher die Lichtemissionsrichtungen LF der Fernlichtscheinwerfer 1 und 2 jeweils nach innen geschwenkt wurden, so dass sich ihre Lichtverteilungen F₁ und F₂ überlagern. Eine solche Lichtverteilung, welche einen schmalen und hellen Fernlichtspot in der Mitte bereitstellt, kann z. B. auf einer geraden Straße angesteuert werden. Ferner kann diese Lichtverteilung angesteuert werden, wenn mittels der Einrichtung 15 ein Verkehrsteilnehmer, wie z. B. ein Fußgänger, neben der Fahrbahn detektiert wurde.

Fig. 6 zeigt ein Beispiel einer Lichtverteilung, die erzeugt wird, wenn von der Erfassungseinrichtung 15 ein entgegenkommendes Fahrzeug 11 detektiert wurde. In diesem Fall wird der linke Fernlichtscheinwerfer 2 abgeschaltet und der rechte Fernlichtscheinwerfer soweit nach außen geschwenkt, dass der Fahrer des entgegenkommenden Fahrzeugs 11 nicht geblendet wird.

Wenn die Erfassungseinrichtung 15 eine Kolonne mit entgegenkommenden Fahrzeugen 11 und 10 detektiert, wie dies in Fig. 7 dargestellt ist, besteht die Gefahr, dass die von den Fernlichtscheinwerfern 1 und 2 erzeugte Lichtverteilung F Folgefahrzeuge 10 des entgegenkommenden Fahrzeugs 11 blenden. In diesem Fall wird die von den Fernlichtscheinwerfern 1 und 2 erzeugten Lichtverteilungen F₁ und F₂ jeweils nach rechts geschwenkt und abgesenkt, bis die Lichtverteilung die Fahrer der entgegenkommenden Fahrzeuge nicht mehr blendet.

Um in diesem Fall ggf. unzulässig hohe Leuchtdichten im Vorfeld des eigenen Fahrzeugs zu verhindern, kann im unteren Bereich der Abdeckscheibe für die Fernlichtscheinwerfer 1 und 2 eine Blende oder eine horizontal streuende Struktur eingebracht werden.

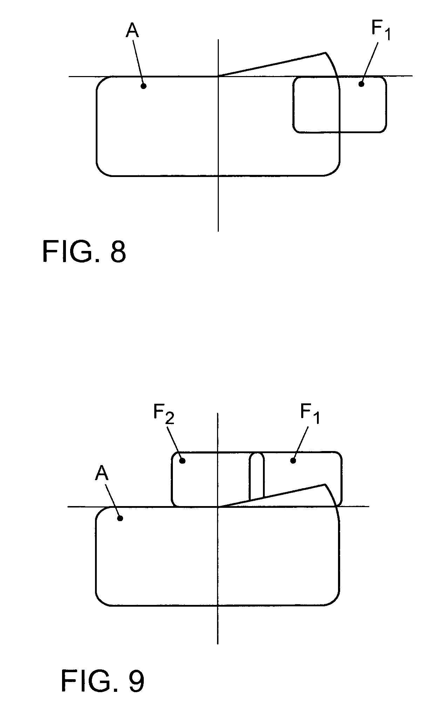

In Fig. 8 ist ein weiteres Beispiel für eine Lichtverteilung gezeigt, die z. B. in einer Rechtskurve angesteuert werden kann. In diesem Fall wird der linke Fernlichtscheinwerfer 2 ausgeschaltet und der rechte Fernlichtscheinwerfer 1 nach unten in den Bereich der Lichtverteilung A des Abblendlichts geschwenkt und ferner nach rechts außen so weit geschwenkt, dass die Lichtverteilung des Abblendlichts A auf der rechten Seite durch die Lichtverteilung F₁ des rechten Scheinwerfers fortgesetzt wird. Entsprechend kann bei der Ansteuerung der Scheinwerferanordnung in einer Linkskurve verfahren werden, indem in diesem Fall der rechte Fernlichtscheinwerfer 1 ausgeschaltet wird und der linke Fernlichtscheinwerfer 2 nach unten und nach links außen geschwenkt wird.

In Fig. 9 ist ein weiteres Beispiel für eine Lichtverteilung gezeigt, die in einer Rechtskurve angesteuert werden kann, wenn eine Fernlichtfunktion bereitgestellt werden soll. In diesem Fall bleiben beide Fernlichtscheinwerfer 1 und 2 eingeschaltet. Sie werden jedoch beide um den gleichen Schwenkwinkel nach rechts geschwenkt, um in diesem Bereich eine bessere Ausleuchtung zu erhalten und gleichzeitig entgegenkommende Fahrzeuge nicht zu blenden. Entsprechend kann - wie oben erläutert - bei einer Linkskurve die Scheinwerferanordnung angesteuert werden.

### Bezugszeichenliste

- 1: rechter Fernlichtscheinwerfer
- 2: linker Fernlichtscheinwerfer
- 10: weitere entgegenkommende Fahrzeuge
- 11: entgegenkommendes Fahrzeug
- 13: Steuergerät für den rechten Fernlichtscheinwerfer
- 14: Steuergerät für den linken Fernlichtscheinwerfer
- 15: Einrichtung zum Erfassen anderer Verkehrsteilnehmer
- 16: Steuergerät
- 17: Fahrzeugbus
- 18: linker Scheinwerfer für das Abblendlicht
- 19: rechter Scheinwerfer für das Abblendlicht

## Patentansprüche

1. Verfahren zum Steuern einer Scheinwerferanordnung für ein Fahrzeug mit einer rechten und einer linken Scheinwerfereinheit, die jeweils separate Scheinwerfer (1, 2, 18, 19) für ein Abblendlicht und ein Fernlicht umfassen, wobei für das Fernlicht zusätzlich zu der von den Scheinwerfern (1, 2) für das Fernlicht erzeugten Lichtverteilung (F) von den Scheinwerfern (18, 19) für das Abblendlicht im Vorfeld des Fahrzeugs eine Ausleuchtung geschaffen wird und die von den Scheinwerfern (1, 2) für das Fernlicht erzeugte Lichtverteilung (F) hinsichtlich Leuchtweite und seitlicher Ausleuchtung veränderbar ist, bei dem
- ein Verkehrsteilnehmer (11, 10) in Richtung der Lichtemission der Scheinwerferanordnung erfasst wird und, **dadurch gekennzeichnet, daß**
- wenn ein solcher Verkehrsteilnehmer (11, 10) erfasst wurde, die von den Scheinwerfern (1,2) für das Fernlicht erzeugte Lichtverteilung (F) hinsichtlich der seitlichen Ausleuchtung so verändert wird, dass die erzeugte Lichtverteilung (F) seitlich von dem erfassten Verkehrsteilnehmer (11, 10) weggeschwenkt wird, und die von den separaten Scheinwerfern (18, 19) für das Abblendlicht erzeugte Lichtverteilung (A) unverändert bleibt und eine begrenzte Leuchtweite hat.

2. Verfahren nach Anspruch 1, **dadurch gekennzeichnet, dass** die von den Scheinwerfern (18, 19) für das Abblendlicht erzeugte Lichtverteilung (A) eine begrenzte Leuchtweite und die von den Scheinwerfern (1, 2) für das Fernlicht erzeugte Lichtverteilung (F) durch die Veränderung der seitlichen Ausleuchtung in Richtung des erfassten Verkehrsteilnehmers (11, 10) einen Mittelbereich mit geringerer Leuchtweite und beidseitig neben diesem Mittelbereich Seitenbereiche mit größerer Leuchtweite bildet.

3. Verfahren nach Anspruch 1 oder 2, **dadurch gekennzeichnet, dass** die von den Scheinwerfern (18, 19) für das Abblendlicht erzeugte Lichtverteilung (A) eine begrenzte Leuchtweite hat und die von den Scheinwerfern (1, 2) für das Fernlicht erzeugte Lichtverteilung (F) in Richtung der Fahrbahn des Fahrzeugs mit der Scheinwerferanordnung von dem erfassten Verkehrsteilnehmer (11, 10) weggeschwenkt wird, wenn der Verkehrsteilnehmer (11, 10) auf der Gegenfahrbahn erfasst wird.

4. Verfahren nach Anspruch 1 oder 3, **dadurch gekennzeichnet, dass** die von den Scheinwerfern (18, 19) für das Abblendlicht erzeugte Lichtverteilung (A) eine begrenzte Leuchtweite hat und die von den Scheinwerfern (1, 2) für das Fernlicht erzeugte Lichtverteilung (F) in Richtung der Fahrbahn des Fahrzeugs mit der Scheinwerferanordnung von dem erfassten Verkehrsteilnehmer (11, 10) weggeschwenkt und ferner die Leuchtweite abgesenkt wird, wenn mehrere Verkehrsteilnehmer (11, 10) auf der Gegenfahrbahn erfasst werden.

5. Verfahren nach einem der vorstehenden Ansprüche, **dadurch gekennzeichnet, dass** die Leuchtweite der von den Scheinwerfern (1, 2) für das Fernlicht erzeugten Lichtverteilung (F) soweit abgesenkt wird, dass sie kleiner als oder gleich der Leuchtweite der von den Scheinwerfern (18, 19) für das Abblendlicht erzeugten Lichtverteilung (A) ist, und dass zur Verringerung der Leuchtdichte der Gesamtlichtverteilung in den Lichtweg der Scheinwerfer (1, 2) für das Fernlicht eine Blende oder eine horizontal streuende Struktur gebracht wird.

6. Verfahren nach einem der vorstehenden Ansprüche, **dadurch gekennzeichnet, dass** der vertikale Winkel des Verkehrsteilnehmers (11, 10) in Richtung der Lichtemission der Scheinwerferanordnung erfasst wird und dass die Leuchtweite im Mittelbereich in Richtung des erfassten Verkehrsteilnehmers (11, 10) in Abhängigkeit von dem vertikalen Winkel des Verkehrsteilnehmers (11, 10) geregelt wird.

## Claims

1. Method for controlling a headlamp arrangement for a vehicle having a right headlamp unit and a left headlamp unit, which in each case comprise separate headlamps (1, 2, 18, 19) for a low beam and a high beam, wherein for the high beam, in addition to the light distribution (F) produced by the headlamps (1, 2) for the high beam, illumination in the area in front of the vehicle is produced by the headlamps (18, 19) for the low beam, and the light distribution (F) produced by the headlamps (1, 2) for the high beam is variable with respect to the luminous range and lateral illumination, in which
- a road user (11, 10) is detected in the direction of the light emission of the headlamp arrangement, and **characterized in that**,
- if such a road user (11, 10) was detected, the light distribution (F) produced by the headlamps (1, 2) for the high beam is changed with respect to the lateral illumination such that the light distribution (F) produced is pivoted away laterally from the detected road user (11, 10), and the light distribution (A) produced by the separate headlamps (18, 19) for the low beam remains unchanged and has a limited luminous range.

2. Method according to Claim 1, **characterized in that** the light distribution (A) produced by the headlamps (18, 19) for the low beam forms a limited luminous range and, owing to the change in the lateral illumination in the direction of the detected road user (11, 10), the light distribution (F) produced by the headlamps (1, 2) for the high beam forms a central region with a smaller luminous range and, on both sides next to this central region, forms side regions with a greater luminous range.

3. Method according to Claim 1 or 2, **characterized in that** the light distribution (A) produced by the headlamps (18, 19) for the low beam has a limited luminous range and the light distribution (F) produced by the headlamps (1, 2) for the high beam is pivoted away from the detected road user (11, 10) in the direction of the lane of the vehicle having the headlamp arrangement, if the road user (11, 10) is detected in the oncoming lane.

4. Method according to Claim 1 or 3, **characterized in that** the light distribution (A) produced by the headlamps (18, 19) for the low beam has a limited luminous range and the light distribution (F) produced by the headlamps (1, 2) for the high beam is pivoted away from the detected road user (11, 10) in the direction of the lane of the vehicle having the headlamp arrangement and furthermore the luminous range is lowered, if a plurality of road users (11, 10) are detected in the oncoming lane.

5. Method according to one of the preceding claims, **characterized in that** the luminous range of the light distribution (F) produced by the headlamps (1, 2) for the high beam is lowered to a degree such that it is less than or equal to the luminous range of the light distribution (A) produced by the headlamps (18, 19) for the low beam, and **in that** in order to reduce the luminance of the total light distribution, a diaphragm or a horizontally scattering structure is inserted in the light path of the headlamps (1, 2) for the high beam.

6. Method according to one of the preceding claims, **characterized in that** the vertical angle of the road user (11, 10) in the direction of the light emission of the headlamp arrangement is captured and that the luminous range in the central region in the direction of the detected road user (11, 10) is regulated in dependence on the vertical angle of the road user (11, 10).

## Revendications

1. Procédé pour commander un ensemble de phares pour un véhicule équipé d'une unité de phare droite et d'une unité de phare gauche, qui comprennent chacune des phares séparés (1, 2, 18, 19) pour un feu de croisement et un feu de route, un éclairage étant créé pour le feu de route par les phares (18, 19) pour le feu de croisement dans le champ devant le véhicule, en plus de la répartition lumineuse (F) produite par les phares (1, 2) pour le feu de route, et la répartition lumineuse (F) produite par les phares (1, 2) pour le feu de route pouvant être modifiée en termes de largeur d'éclairage et d'éclairage latéral,
- un usager de la route (11, 10) étant détecté dans la direction de l'émission de lumière de l'ensemble de phares et **caractérisé en ce que**
- lorsqu'un tel usager de la route (11, 10) a été détecté, la répartition lumineuse (F) produite pour le feu de route par les phares (1, 2) est modifiée en termes d'éclairage latéral de telle sorte que la répartition lumineuse (F) produite soit pivotée latéralement à l'écart de l'usager de la route détecté (11, 10), et la répartition lumineuse (A) produite pour le feu de croisement par les phares séparés (18, 19) reste inchangée et a une largeur d'éclairage limitée.

2. Procédé selon la revendication 1, **caractérisé en ce que** la répartition lumineuse (A) produite par les phares (18, 19) pour le feu de croisement forme une largeur d'éclairage limitée et la répartition lumineuse (F) produite par les phares (1, 2) pour le feu de route forme, par la variation de l'éclairage latéral dans la direction de l'usager de la route détecté (11, 10), une zone centrale de plus faible largeur d'éclairage et, de chaque côté de cette zone centrale, des zones latérales de plus grande largeur d'éclairage.

3. Procédé selon la revendication 1 ou 2, **caractérisé en ce que** la répartition lumineuse (A) produite par les phares (18, 19) pour le feu de croisement a une largeur d'éclairage limitée et la répartition lumineuse (F) produite par les phares (1, 2) pour le feu de route est pivotée dans la direction de la voie de circulation du véhicule avec l'ensemble de phares à l'écart de l'usager de la route détecté (11, 10) lorsque l'usager de la route (11, 10) est détecté sur la voie de circulation opposée.

4. Procédé selon la revendication 1 ou 3, **caractérisé en ce que** la répartition lumineuse (A) produite par les phares (18, 19) pour le feu de croisement a une largeur d'éclairage limitée et la répartition lumineuse (F) produite par les phares (1, 2) pour le feu de route est pivotée dans la direction de la voie de circulation du véhicule avec l'ensemble de phares à l'écart de l'usager de la route détecté (11, 10), et de plus la largeur d'éclairage est réduite lorsque plusieurs usagers de la route (11, 10) sont détectés sur la voie de circulation opposée.

5. Procédé selon l'une quelconque des revendications précédentes, **caractérisé en ce que** la largeur d'éclairage de la répartition lumineuse (F) produite par les phares (1, 2) pour le feu de route est réduite dans une mesure telle qu'elle soit inférieure ou égale à la largeur d'éclairage de la répartition lumineuse (A) produite par les phares (18, 19) pour le feu de croisement, et **en ce que** pour réduire la densité d'éclairage de la répartition lumineuse totale, on place un écran ou une structure diffusant horizontalement dans la voie d'éclairage des phares (1, 2) pour le feu de route.

6. Procédé selon l'une quelconque des revendications précédentes, **caractérisé en ce que** l'angle vertical de l'usager de la route (11, 10) dans la direction de l'émission de lumière de l'ensemble de phares est détecté et **en ce que** la largeur d'éclairage dans la région centrale dans la direction de l'usager de la route détecté (11, 10) est régulée en fonction de l'angle vertical de l'usager de la route (11, 10).
